# EUROPEAN PATENT APPLICATION

(11) **EP 1 832 865 A1**
(43) Date of publication of application: **12.09.2007**
(21) Application number: 05822777.8
(22) Date of filing: 27.12.2005
(51) Int. Cl.: G01N 21/37

(54) **INFRARED GAS ANALYZER**

(30) Priority: 28.12.2004 JP 2004380571; 28.12.2004 JP 2004380572; 28.12.2004 JP 2004380573; 28.12.2004 JP 2004380574
(71) Applicant: Yokogawa Electric Corporation, Tokyo 180-8750 (JP)
(72) Inventor: YAMAGISHI, Hideaki, c/o YOKOGAWA ELECTRIC CORP., Musashino-shi, Tokyo 180-8750 (JP); MATSUMURA, Shigeru, c/o YOKOGAWA ELECTRIC CORP., Musashino-shi, Tokyo 180-8750 (JP); NANKO, Tomoaki, c/o YOKOGAWA ELECTRIC CORP., Musashino-shi, Tokyo 180-8750 (JP)
(74) Representative: Grünecker, Kinkeldey, Stockmair & Schwanhäusser Anwaltssozietät
(86) International application number: PCT/JP2005/023983
(87) International publication number: WO 2006/070843

(57) **Abstract**

An infrared gas analyzer includes: a sample cell through which a sample gas containing a measurement component that absorbs an infrared light flows; one or a plurality of light sources that emits the infrared light; and a detector that detects a concentration of the measurement component contained in the sample gas by utilizing a change in the infrared light being absorbed by the measurement component when the sample gas passes through the sample cell. The detector includes: a first chamber in which a detection gas containing the measurement component is filled and which is irradiated with the infrared light passed through the sample cell; a second chamber in which the detection gas containing the measurement component is filled and which is irradiated with the infrared light passed through a passage different from the sample cell; a gas flow channel which is arranged between the first chamber and the second chamber and through which the detection gas flows between the two chambers; and a first and a second thermal flow sensors arranged in the gas flow channel. The first and the second thermal flow sensors are arranged in the same direction at different positions in which flow directions of the detection gas in the gas flow channel are different from each other.

## Description

### TECHNICAL FIELD

The present invention relates to an infrared gas analyzer for detecting a concentration of a measurement component that is contained in sample gas, by utilizing an absorption characteristic of an infrared light of a measurement gas.
More particularly, the present invention relates to an infrared gas analyzer capable of conducting a highly accurate measurement operation by removing an influence of external vibration given to the infrared gas analyzer.

### BACKGROUND ART

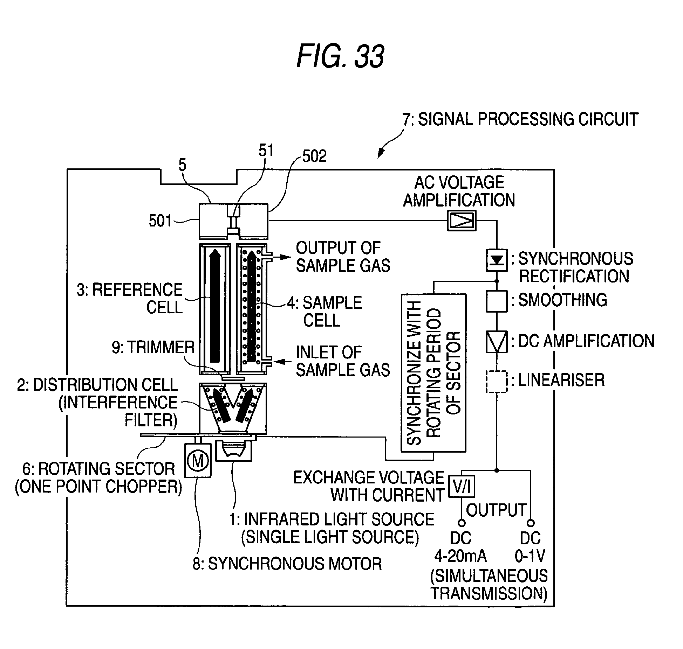

Fig. 33 is a view showing a structure of an example of the infrared gas analyzer of the related art. As shown in Fig. 33, infrared light emitted from an infrared light source 1 is divided into two by a distribution cell 2 to be respectively incident upon a reference cell 3 and a sample cell 4. In the reference cell 3, gas not containing a measurement component, such as inactive gas, is filled. Sample gas flows in the sample cell 4. Therefore, infrared light that has been divided into two by the distribution cell 2 is absorbed by the measurement component only on the sample cell 4 side, and reaches a detector 5.

The detector 5 has two chambers, which are a reference side chamber 501 which receives light from the reference cell 3 and a sample side chamber 502 which receives light from the sample cell 4. A thermal flow sensor 51 for detecting a gas flow is attached in a gas flow channel linking the two chambers. In the detector 5, gas (detection gas) containing the same component as the measurement component is filled. Therefore, when infrared lights from the reference cell 3 and the sample cell 4 are incident upon the detector 5, the infrared light is absorbed by the measurement component in the detection gas. Accordingly, the detection gas in the reference side chamber 501 and the detection gas in the sample side chamber 502 are respectively thermally expanded.

Since the reference gas in the reference cell 3 does not contain a measurement component, infrared light passing through the reference cell 3 is not absorbed by the measurement component. When the sample gas in the sample cell 4 contains the measurement component, a portion of the infrared light is absorbed there. Therefore, in the detector 5, a quantity of infrared light incident upon the sample side chamber 502 is reduced, and a thermal expansion of the detection gas in the reference side chamber 501 becomes greater than a thermal expansion of the detection gas in the sample side chamber 502. The infrared light is turned on and off by a rotating sector 6. Therefore, the infrared light is repeatedly irradiated and shut off. When the infrared light is shut off, the infrared light is incident upon neither the reference side chamber 501 nor the sample side chamber 502. Accordingly, the detection gas is not expanded.

Therefore, between the reference side chamber 501 and the sample side chamber 502, a pressure difference is generated periodically according to a concentration of the measurement component that is contained in the sample gas. Accordingly, the detection gas flows back and forth through the gas flow channel arranged between the chambers. The behavior of the detection gas is detected by the thermal flow sensor 51. AC voltage amplification is performed on the detected signal by a signal processing circuit 7 and the amplified signal is outputted as a signal corresponding to the concentration of the measurement component. Reference numeral 8 is a synchronous motor that drives the rotating sector 6. Reference numeral 9 is a trimmer to adjust a balance between the infrared light incident upon the reference cell 3 and the infrared light incident upon the sample cell 4.

As described above, when the concentration of the measurement component that is contained in the sample gas is changed, the quantity of infrared light incident upon the detector 5 (the sample side chamber 502) is changed. Therefore, it is possible to obtain an output signal corresponding to the concentration of the measurement component via the signal processing circuit 7.

In this case, when vibration is applied to the infrared gas analyzer, this vibration appears on the output signal as noise. Therefore, the measurement accuracy of the infrared gas analyzer is deteriorated.

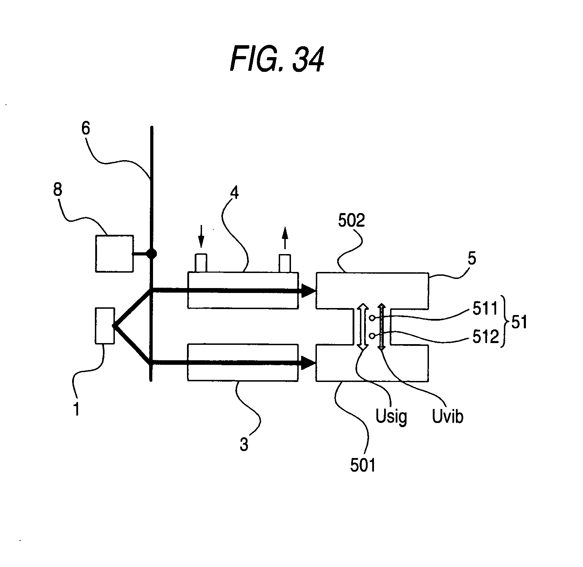

Fig. 34 is a conceptual view for explaining an influence of vibration. The same reference numerals are used to indicate similar parts in Figs. 33 and 34. Assuming an arrow U_{sig} is a moving direction of the detection gas generated in the gas flow channel by the absorption of the infrared light, a first heater wire 511 and a second heater wire 512 of the thermal flow sensor 51 are arranged along the gas moving (flowing) direction U_{sig} with a predetermined distance. The first heater wire 511 and the second heater wire 512 generate changes in temperature (resistance) according to the movement of the detection gas.

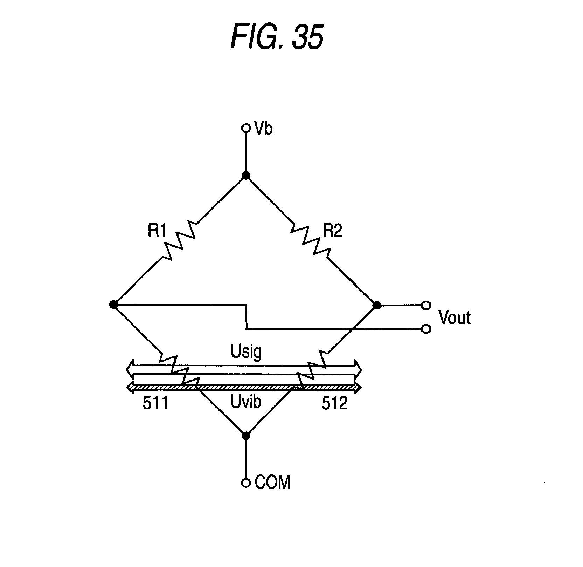

When the detection gas in the gas flow channel moves, the heater wire on the upstream side is cooled by the detection gas and the heater wire on the downstream side is heated by the heater wire on the upstream side. Accordingly, a difference in temperature is caused between the two heater wires.
Changes in the temperature (changes in the resistance) of the two heater wires 511, 512 are detected by using a bridge circuit shown in Fig. 35.

When vibration is applied to the infrared gas analyzer, assuming a vibration component in the same direction as the direction of the arrangement of the heater wires 511, 512 is expressed by an arrow U_{vib}, the detection gas moves (is vibrated) by inertia, and the movement (vibration) of the detection gas in this arrowed direction is detected by the thermal flow sensor 51 and superimposed on an output signal Vₒᵤₜ as noise.

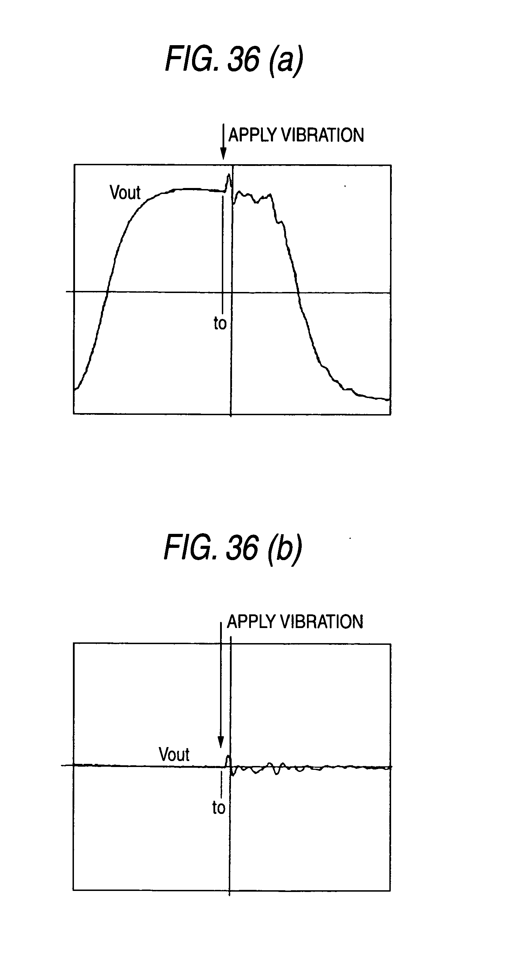

Figs. 36(a) and 36(b) are waveform diagrams showing an influence of vibration applied to the infrared gas analyzer. Fig. 36(a) is an output signal waveform of the thermal flow sensor 51 in a measurement state, when external vibration is applied to the infrared gas analyzer at time tₒ. Fig. 36(b) is an output signal waveform of the thermal flow sensor 51 in a state that the infrared light source 1 is turned off.

As can be seen in Figs. 36(a) and 36(b), shapes of the fluctuation of the output signal waveforms caused by vibration are approximately the same. Therefore, it can be understood that the fluctuation is generated from the same cause (vibration), and the shape of the fluctuation is independent from the original signal waveform due to the absorption of the infrared light.

JP-A-2002-131230 is referred to as the related art.

### DISCLOSURE OF THE INVENTION

### PROBLEMS THAT THE INVENTION IS TO SOLVE

When the vibration applied to the infrared gas analyzer has a vibration component (U_{vib}) in the same direction as the direction of the arrangement of the heater wires 511, 512 as described above, this vibration component (U_{vib}) is detected by the thermal flow sensor 51 together with the movement (U_{sig}) of the detection gas generated in the gas flow channel by the absorption of the infrared light. Accordingly, it is impossible to separate this noise component from the signal component.
Further, a structure of the analyzer and a compensation method of the output to effectively remove the influence of vibration have not been proposed yet.

An object of the present invention is to provide an infrared gas analyzer capable of conducting a highly accurate measurement operation by removing an influence of external vibration applied to the infrared gas analyzer.

### MEANS FOR SOLVING THE PROBLEMS

The present invention provides an infrared gas analyzer, comprising:
a sample cell through which a sample gas containing a measurement component that absorbs an infrared light flows;
one or a plurality of light sources that emits the infrared light; and
a detector that detects a concentration of the measurement component contained in the sample gas by utilizing a change in the infrared light being absorbed by the measurement component when the sample gas passes through the sample cell,
wherein the detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first and a second thermal flow sensors arranged in the gas flow channel,
wherein the gas flow channel has a flow channel portion in which the detection gas flows through a right angle, and
the first and the second thermal flow sensors are arranged in the same direction at different positions in which flow directions of the detection gas in the gas flow channel are different from each other.

The infrared gas analyzer further comprising:
a compensation section for compensating an output of the first thermal flow sensor by an output of the second thermal flow sensor.

In the infrared gas analyzer, the compensation section compensates for a noise component caused by a vibration, based on the respective outputs of the first and the second thermal flow sensors.

In the infrared gas analyzer, each of the first and the second thermal flow sensors is a bridge circuit having at least two heater wires.

In the infrared gas analyzer, each of the first and the second thermal flow sensors has at least two heater wires, and
the compensation section is a bridge circuit that includes the heater wires of the first and the second thermal flow sensors.

In the infrared gas analyzer, each of the first and the second thermal flow sensors has at least two heater wires arranged in parallel with respect to a direction for detecting a flow of the detection gas.

According to the infrared gas analyzer described above, the second thermal flow sensor detects an influence (a noise component) of the vibration applied to the infrared gas analyzer. However, the second thermal flow sensor is not sensitive to a flow (a signal component) of the detection gas corresponding to the concentration of the measurement component. Accordingly, an output of the first thermal flow sensor is compensated by an output of the second thermal flow sensor, thereby it is possible to remove an influence of the external vibration applied to the infrared gas analyzer. Therefore, a highly accurate measurement action can be conducted.

The present invention provides an infrared gas analyzer, comprising:
a sample cell through which a sample gas containing a measurement component that absorbs an infrared light flows;
one or a plurality of light sources that emits the infrared light; and
a detector that detects a concentration of the measurement component contained in the sample gas by utilizing a change in the infrared light being absorbed by the measurement component when the sample gas passes through the sample cell,
wherein the detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first and a second thermal flow sensors arranged in the gas flow channel,
the gas flow channel has a branch section where the detection gas flows by being branched into two directions that are opposite to each other, and
the first and the second thermal flow sensors are arranged in the same direction at different positions in which flow directions of the detection gas in the gas flow channel are different from each other.

The infrared gas analyzer further comprising:
a compensation section for compensating an output of the first thermal flow sensor by an output of the second thermal flow sensor.

In the infrared gas analyzer, the compensation section compensates for a noise component caused by a vibration, based on the respective outputs of the first and the second thermal flow sensors.

In the infrared gas analyzer, each of the first and the second thermal flow sensors is a bridge circuit having at least two heater wires.

In the infrared gas analyzer, each of the first and the second thermal flow sensors has at least two heater wires, and
the compensation section is a bridge circuit that includes the heater wires of the first and the second thermal flow sensors.

In the infrared gas analyzer, each of the first and the second thermal flow sensors has at least two heater wires arranged in parallel with respect to the flow direction of the detection gas.

In the infrared gas analyzer, the gas flow channel has U-shaped portions for respectively making the detection gas being branched at the branch portion flow in a reverse direction, and
the detector has a third and a fourth thermal flow sensors arranged in the gas flow channel being folded at the U-shaped portions, in the same direction as the direction of the first and the second thermal flow sensors.

According to the infrared gas analyzer described above, concerning the first thermal flow sensor and the second thermal flow sensor, with respect to a flow (a signal component) of the detection gas corresponding to the concentration of the measurement component, an influence (a noise component) of the vibration applied to the infrared gas analyzer acts in an opposite polarity. Accordingly, an output of the first thermal flow sensor is compensated by an output of the second thermal flow sensor, thereby it is possible to remove an influence of the external vibration applied to the infrared gas analyzer. Therefore, a highly accurate measurement operation can be conducted.

The present invention provides an infrared gas analyzer, comprising:
a sample cell through which a sample gas containing a measurement component that absorbs an infrared light flows;
one or a plurality of light sources that emits the infrared light; and
a detector that detects a concentration of the measurement component contained in the sample gas by utilizing a change in the infrared light being absorbed by the measurement component when the sample gas passes through the sample cell,
wherein the detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first and a second thermal flow sensors arranged in the gas flow channel,
the gas flow channel has a U-shaped portion for making the detection gas flow in a reverse direction, and
the first and the second thermal flow sensors are arranged in the same direction at different positions in which flow directions of the detection gas in the gas flow channel are different from each other.

The infrared gas analyzer further comprising:
a compensation section for compensating an output of the first thermal flow sensor by an output of the second thermal flow sensor.

In the infrared gas analyzer, the compensation section compensates for a noise component caused by a vibration, based on the respective outputs of the first and the second thermal flow sensors.

In the infrared gas analyzer, each of the first and the second thermal flow sensors is a bridge circuit having at least two heater wires.

In the infrared gas analyzer, each of the first and the second thermal flow sensors has at least two heater wires, and
the compensation section is a bridge circuit that includes the heater wires of the first and the second thermal flow sensors.

In the infrared gas analyzer, each of the first and the second thermal flow sensors has at least two heater wires arranged in parallel with respect to the flow direction of the detection gas.

According to the infrared gas analyzer described above, concerning the first thermal flow sensor and the second thermal flow sensor, with respect to a flow (a signal component) of the detection gas corresponding to the concentration of the measurement component, an influence (a noise component) of the vibration applied to the infrared gas analyzer acts in an opposite polarity. Accordingly, an output of the first thermal flow sensor is compensated by an output of the second thermal flow sensor, thereby it is possible to remove an influence of the external vibration applied to the infrared gas analyzer. Therefore, a measurement can be highly accurately conducted.

The present invention provides an infrared gas analyzer, comprising:
a sample cell through which a sample gas containing a measurement component that absorbs an infrared light flows;
a measurement detector that detects a concentration of the measurement component contained in the sample gas by utilizing a change in the infrared light being absorbed by the measurement component when the sample gas passes through the sample cell; and
a compensation detector being fixed to the measurement detector,
wherein the measurement detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first thermal flow sensor arranged in the gas flow channel, and
the compensation detector includes:
   a second thermal flow sensor arranged in a space where the detection gas containing the measurement component is filled, in the same direction as that of the first flow sensor.

The infrared gas analyzer further comprising:
a compensation section for compensating an output of the first thermal flow sensor by an output of the second thermal flow sensor.

In the infrared gas analyzer, a shape of the compensation detector is the same as that of the measurement detector, and the compensation detector does not receive the infrared light.

In the infrared gas analyzer, the measurement detector and the compensation detector are formed integrally.

In the infrared gas analyzer, the compensation section obtains a difference between an output of the first thermal flow sensor and an output of the second thermal flow sensor.

In the infrared gas analyzer, each of the first and the second thermal flow sensors is a bridge circuit having at least two heater wires.

In the infrared gas analyzer, each of the first and the second thermal flow sensors has at least two heater wires, and
the compensation section is a bridge circuit that includes the heater wires of the first and the second thermal flow sensors.

In the infrared gas analyzer, each of the first and the second thermal flow sensors has at least two heater wires arranged in parallel with respect to the flow direction of the detection gas.

According to the infrared gas analyzer described above, an influence of the vibration applied to the infrared gas analyzer is detected by the compensation detector and an output of the measurement detector is thereby compensated. Therefore, it is possible to remove an influence of the external vibration given to the infrared gas analyzer and conduct a highly accurate measurement action.

### BRIEF DESCRIPTION OF THE DRAWINGS

Fig. 1 is a view showing a configuration of a first embodiment of the infrared gas analyzer of the present invention.
Fig. 2 is a circuit diagram showing an example of the specific configuration of a detecting section for detecting outputs of the thermal flow sensors 151, 153.
Fig. 3 is a view showing a configuration of a second embodiment of the infrared gas analyzer of the present invention.
Fig. 4 is a circuit diagram showing a specific example of the configuration of the compensation section 113.
Fig. 5 is a circuit diagram showing a variation of a bridge circuit in the compensation section 113.
Fig. 6 is a view showing a configuration of a third embodiment of the infrared gas analyzer of the present invention.
Fig. 7 is a circuit diagram showing a specific example of the configuration of the compensation section (the bridge circuit) 113.
Fig. 8 is a view showing a configuration of a fourth embodiment of the infrared gas analyzer of the present invention.
Fig. 9 is a circuit diagram showing a specific configuration of a detecting section for detecting outputs of the thermal flow sensors 251, 253.
Fig. 10 is a view showing a configuration of a fifth embodiment of the infrared gas analyzer of the present invention.
Fig. 11 is a circuit diagram showing an example of the specific configuration of the compensation section 213.
Fig. 12 is a circuit diagram showing a variation of a bridge circuit in the compensation section 213.
Fig. 13 is a view showing a configuration of a sixth embodiment of the infrared gas analyzer of the present invention.
Fig. 14 is a circuit diagram showing a specific example of the configuration of the compensation section (the bridge circuit) 213.
Fig. 15 is a view showing a configuration of a seventh embodiment of the infrared gas analyzer of the present invention.
Fig. 16 is a view showing a configuration of an eighth embodiment of the infrared gas analyzer of the present invention.
Fig. 17 is a circuit diagram showing a specific example of the configuration of a detection section for detecting outputs of the thermal flow sensors 351, 353.
Fig. 18 is a view showing a configuration of a ninth embodiment of the infrared gas analyzer of the present invention.
Fig. 19 is a circuit diagram showing a specific example of the configuration of the compensation section 313.
Fig. 20 is a circuit diagram showing a variation of a bridge circuit of the compensation section 313.
Fig. 21 is a view showing a configuration of a tenth embodiment of the infrared gas analyzer of the present invention.
Fig. 22 is a circuit diagram showing a specific example of the configuration of the compensation section (the bridge circuit) 313.
Fig. 23 is a view showing a configuration of an eleventh embodiment of the infrared gas analyzer of the present invention.
Fig. 24 is a circuit diagram showing a specific example of the configuration of the bridge circuits 11, 12.
Fig. 25 is a view showing a configuration of a twelfth embodiment of the infrared gas analyzer of the present invention.
Fig. 26 is a circuit diagram showing a specific example of the configuration of the compensation section 13.
Fig. 27 is a circuit diagram showing a variation of a bridge circuit of the compensation section 13.
Fig. 28 is a view showing a configuration of a thirteenth embodiment of the infrared gas analyzer of the present invention.
Fig. 29 is a circuit diagram showing a specific example of the configuration of the compensation section (the bridge circuit) 13.
Fig. 30 is a view showing a configuration of a fourteenth embodiment of the infrared gas analyzer of the present invention.
Fig. 31 is a view showing a configuration of another embodiment of the infrared gas analyzer of the present invention.
Fig. 32 is a view showing a configuration of another embodiment of the infrared gas analyzer of the present invention.
Fig. 33 is a view showing a configuration of an example of the infrared gas analyzer of the related art.
Fig. 34 is a conceptual view for explaining an influence caused by vibration.
Fig. 35 is a view showing a bridge circuit for detecting a change in temperature (a change in resistance) of the heater wires 511, 512.
Figs. 36(a) and 36(b) are waveform diagrams showing an influence of vibration applied to the infrared gas analyzer.

### BEST MODE FOR CARRYING OUT THE INVENTION

Referring to the drawings, an infrared gas analyzer of the present invention and its output compensation method will be explained below.

### FIRST EMBODIMENT

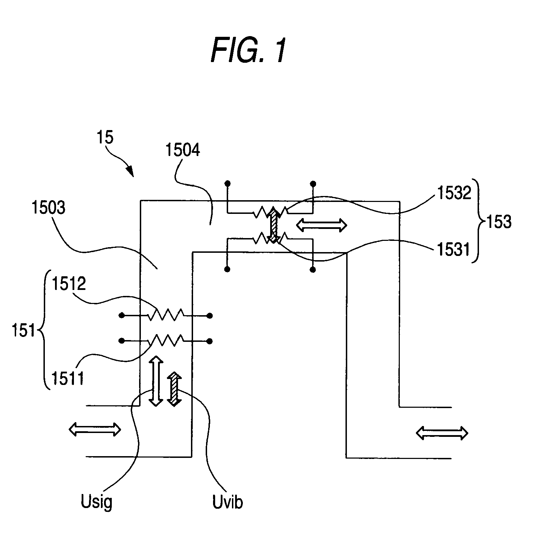

Fig. 1 is a view showing a configuration of an embodiment of the infrared gas analyzer of the present invention. Same reference numerals are used to indicate similar parts in Fig. 1 and Figs. 33 to 35. Reference numerals 1503, 1504 are gas flow channels through which the detection gas flows in a right angle direction. In one gas flow channel 1503, a thermal flow sensor 151 for detecting a flow (a signal component: arrow U_{sig}) of the detection gas corresponding to a concentration of a measurement component is arranged. In the other gas flow channel 1504, a thermal flow sensor 153 including heater wires 1531, 1532 is arranged. The heater wires 1531, 1532 of the thermal flow sensor 153 are arranged in the same direction as that of heater wires 1511, 1512 of the thermal flow sensor 151.

In this case, a flow of the detection gas (a signal component) corresponding to the concentration of the detection component flows in the gas flow channels 1503, 1504, which are bent to form a right angle, as shown by the arrow U_{sig}. A flow of the detection gas (a noise component) caused by vibration acts in the gas flow channels 1503, 1504 as shown by the arrow U_{vib}.

When two thermal flow sensors 151, 153 are arranged in the same direction in the gas flow channels 1503, 1504, which are bent to form a right angle, as shown in Fig. 1, the thermal flow sensor 151 detects the noise component U_{vib} together with the signal component U_{sig}. Although the thermal flow sensor 153 detects the noise component U_{vib}, the thermal flow sensor 153 is not sensitive to the signal component U_{sig}.

Accordingly, when the noise component caused by vibration is compensated based onn the outputs of the thermal flow sensor 151 and the thermal flow sensor 153, an influence of the external vibration applied to the infrared gas analyzer can be removed and it becomes possible to conduct a highly accurate measurement operation.

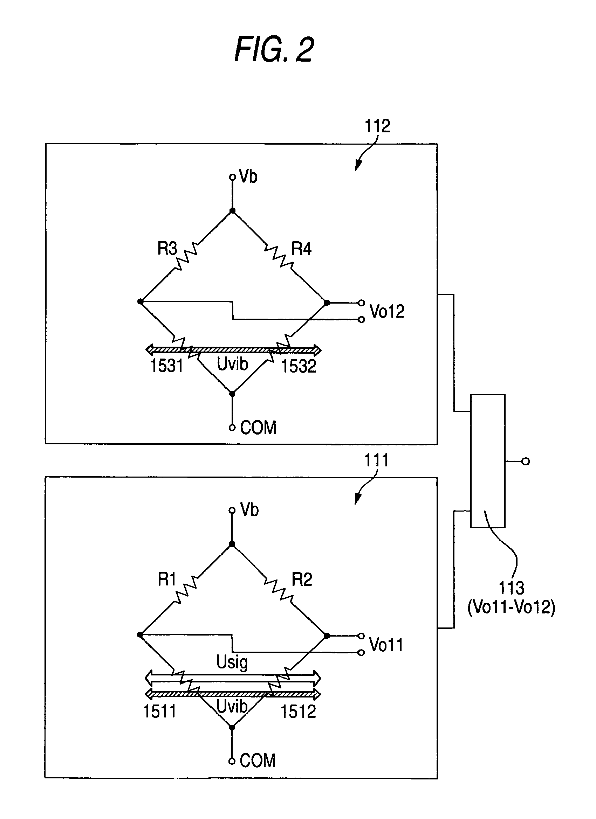

Fig. 2 is a circuit diagram showing an example of the specific configuration of a detecting section for detecting outputs of the thermal flow sensors 151, 153. In Fig. 2, reference numerals 111, 112 are bridge circuits for detecting changes in resistance (changes in temperature) of the heater wires 1511, 1512, 1531, 1532 of the thermal flow sensors 151, 153. Reference numeral 113 is a compensation section for compensating a noise component caused by vibration, based on a difference between the output Vₒ11 of the bridge circuit 111 and the output Vₒ12 of the bridge circuit 112.
In this connection, the compensation section 113 of this embodiment obtains the difference while taking account of the polarity of the output Vₒ11 of the bridge circuit 111 and the polarity of the output Vₒ12 of the bridge circuit 112.

As explained in Fig. 35, in the bridge circuit 111, a movement of the detection gas (the arrow U_{sig}) corresponding to the concentration of the measurement gas and a movement of the detection gas (the arrow U_{vib}) caused by vibration are detected. Therefore, its output signal Vₒ11 contains a vibration noise component.
On the other hand, in the bridge circuit 112, only the movement of the detection gas (the arrow U_{vib}) caused by vibration is detected, and the output signal Vₒ12 corresponding to the vibration noise component is obtained.

Accordingly, when a difference (Vₒ11 - Vₒ12) between these output signals Vₒ11, Vₒ12 is obtained by the compensation section 113, vibration noise components contained in the output signals Vₒ11, Vₒ12 are compensated, and a detection signal with little noise component can be obtained.

### SECOND EMBODIMENT

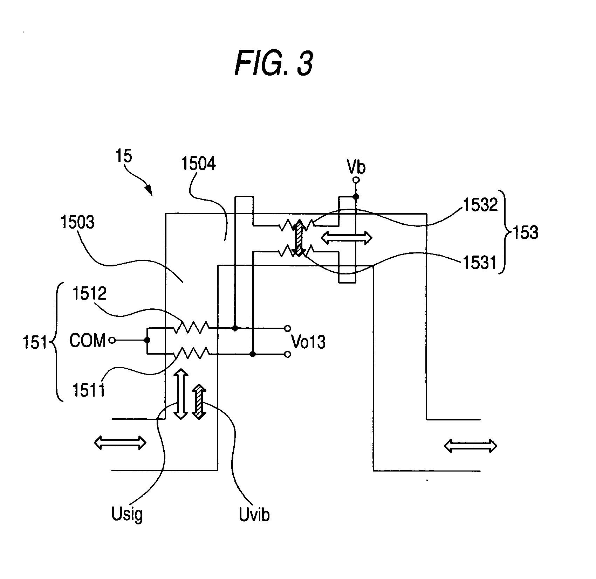

Fig. 3 is a view showing a configuration of a second embodiment of the infrared gas analyzer of the present invention. Same reference numerals are used to indicate similar parts in Figs. 1 and 3. In the embodiment shown in Fig. 3, a bridge circuit is provided in the compensation section 113, and an output signal Vₒ13 from which a vibration noise component is removed is directly obtained from the bridge circuit.

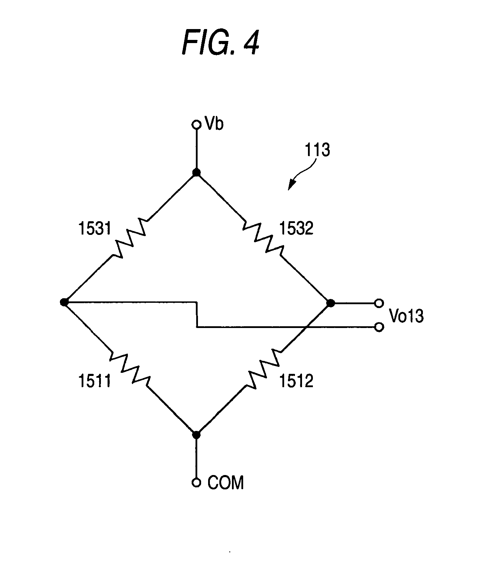

Fig. 4 is a circuit diagram showing a specific example of the configuration of the compensation section 113. As shown in Fig. 4, heater wires 1511, 1512, 1531, 1532 of the thermal flow sensors 151, 153 are inserted in different sides of the bridge circuit, and the output signal Vₒ13 corresponding to a difference between the outputs of two thermal flow sensors 151, 153 is obtained from the output of the bridge circuit.

That is, the heater wires 1531, 1532 of the thermal flow sensor 153 are inserted in different sides of the bridge circuit in a direction that compensates for noise components superimposed on the heater wires 1511, 1512 of the thermal flow sensor 151.
Therefore, two bridge circuits 111, 112 shown in Fig. 2 are omitted and the structure can be made simple.

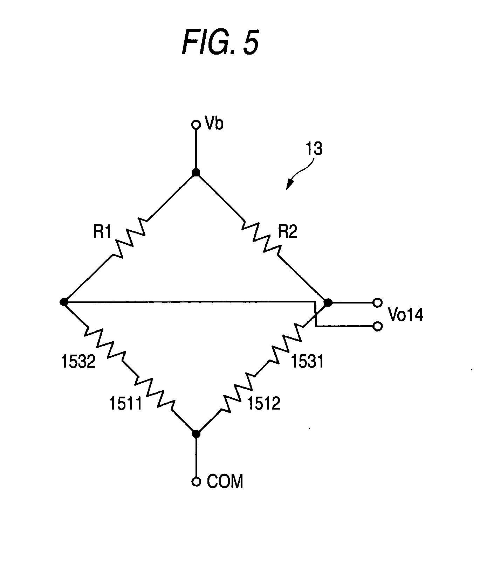

Fig. 5 is a circuit diagram showing a variation of the bridge circuit in the compensation section 113. In the embodiment shown in Fig. 5, heater wires 1511, 1512, 1531, 1532 of the thermal flow sensors 151, 153 are inserted in common sides of the bridge circuit.
That is, when the heater wires 1531, 1532 of the thermal flow sensor 153 are inserted in the common sides of the bridge circuit in a direction that compensates for the noise components superimposed on the heater wires 1511, 1512 of the thermal flow sensor 151, the same noise removing effect as that of Fig. 4 can be provided.

### THIRD EMBODIMENT

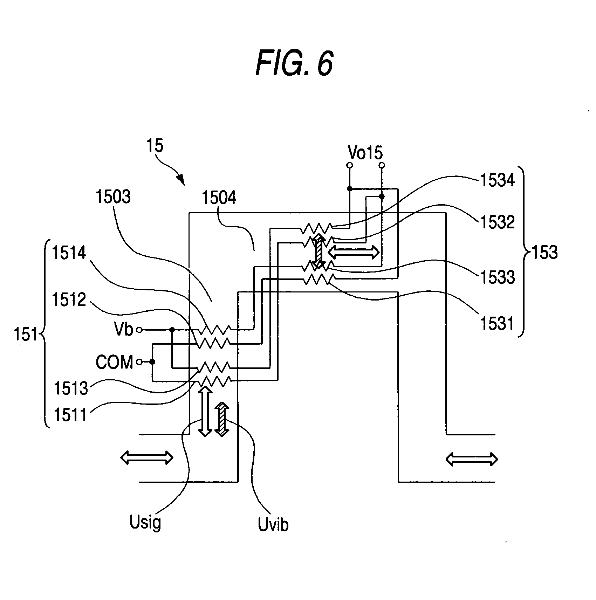

Fig. 6 is a view showing a configuration of a third embodiment of the infrared gas analyzer of the present invention. Same reference numerals are used to indicate similar parts in Figs. 1 to 5 and Fig. 6. In the embodiment shown in Fig. 6, the thermal flow sensors 151, 153 are respectively made up of four heater wires 1511, 1512, 1513, 1514, and 1531, 1532, 1533, 1534.

In the thermal flow sensors 151, 153, heater wire portions arranged on the upstream side and the downstream side of the gas flow respectively include two heater wires. These heater wires are arranged in parallel with respect to the direction of the flow of the detection gas.

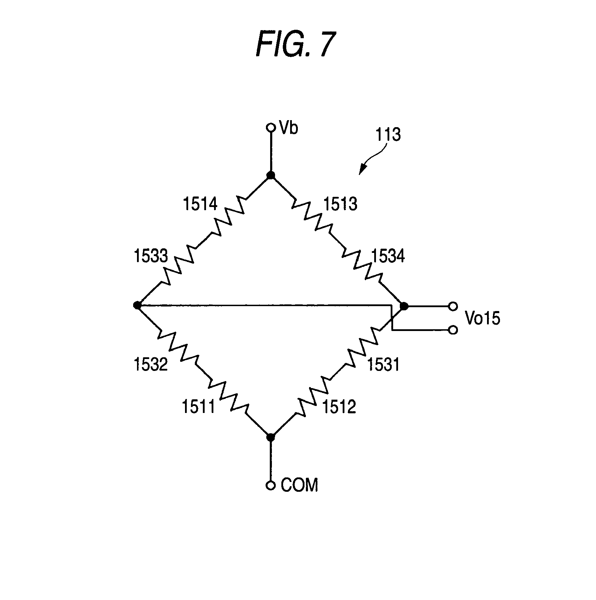

Fig. 7 is a circuit diagram showing a specific example of the configuration of the compensation section (the bridge circuit) 113. As shown in Fig. 7, the heater wires 1511, 1512, 1513, 1514, 1531, 1532, 1533, 1534 of the thermal flow sensors 151, 153 are respectively inserted in the sides of the bridge circuit in a direction that increases the outputs of the respective sensors.
Therefore, it is possible to realize the same noise removing effect as that of Fig. 4. Further, it is possible to obtain an output signal Vₒ15, the magnitude of which is twice as large as that of Fig. 4.
The number of heater wires of the thermal flow sensors 151, 153 is not necessarily limited to four.

In this connection, in the above explanation, the outputs of the thermal flow sensors 151, 153 are detected with the bridge circuit. However, it should be noted that positions where the respective heater wires of the thermal flow sensors 151, 153 are inserted are not limited to the above specific embodiment shown in the drawing.

### FOURTH EMBODIMENT

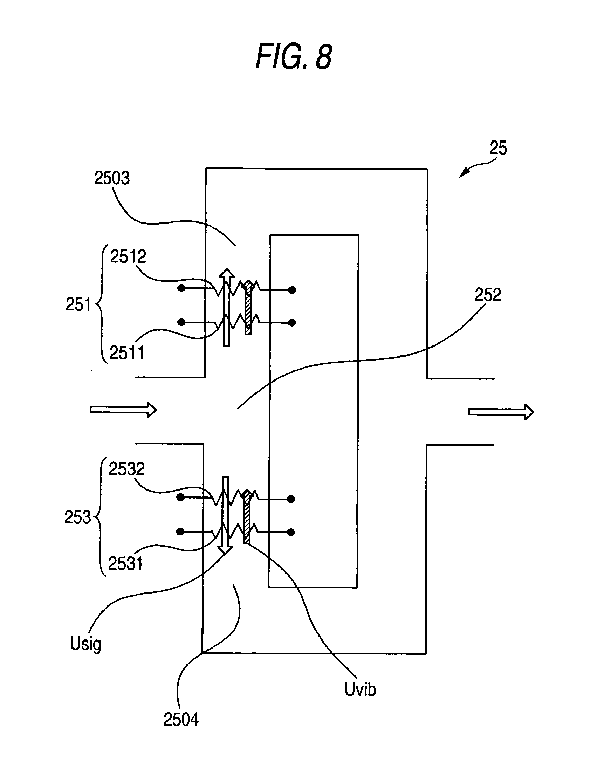

Fig. 8 is a view showing a configuration of a fourth embodiment of the infrared gas analyzer of the present invention. Same reference numerals are used to indicate similar parts in Fig. 8 and Figs. 33 to 35. Reference numerals 2503, 2504 are gas flow channels, and reference numeral 252 is its branch portion. In this structure, the detection gas is made to flow in the reverse directions with respect to the branch portion 252. In one gas flow channel 2503, the thermal flow sensor 251 is arranged. In the other gas flow channel 2504, the thermal flow sensor 253 including heater wires 2531, 2532 is arranged. The heater wires 2531, 2532 of the thermal flow sensor 253 are arranged in the same direction as that of the heater wires 2511, 2512 of the thermal flow sensor 251.

In this case, a flow of the detection gas which corresponds to the concentration of the detection component flows through the gas flow channels 2503, 2504, which are folded back, as shown by the arrow U_{sig}. A flow of the detection gas, which is caused by vibration, acts as the arrow U_{vib} in the gas flow channels 2503, 2504.
In this connection, the detection gas reciprocates in the gas flow channels 2503, 2504 when infrared light is turned on and off. However, in the case shown in the drawing, in order to clearly show the operational effects of the branched gas flow channels 2503, 2504, the flow of the detection gas is illustrated by the arrow (flow) in one direction. This matter is the same with respect to the flow (the arrow U_{vib}) of the detection gas caused by vibration.

As shown in Fig. 8, in the branched gas flow channels 2503, 2504, two thermal flow sensors 251, 253 are arranged while the directions of the two thermal flow sensors 251, 253 are being made to be the same. Then, concerning the thermal flow sensors 251, 253, with respect to the flow (the arrow U_{sig}) of the detection gas corresponding to the concentration of the measurement component, an influence of vibration (the arrow U_{vib}) acts in the reverse phase.

In the state shown in Fig. 8, the arrow U_{sig} and the arrow U_{vib} are in the same direction at the position of the thermal flow sensor 251, and the arrow U_{sig} and the arrow U_{vib} are in the opposite direction at the position of the thermal flow sensor 253.

Accordingly, when the outputs of the thermal flow sensors 251, 253 are added to the polarity for compensating a noise component generated by vibration, an influence of the external vibration given to the infrared gas analyzer can be removed and it becomes possible to conduct a highly accurate measurement operation.

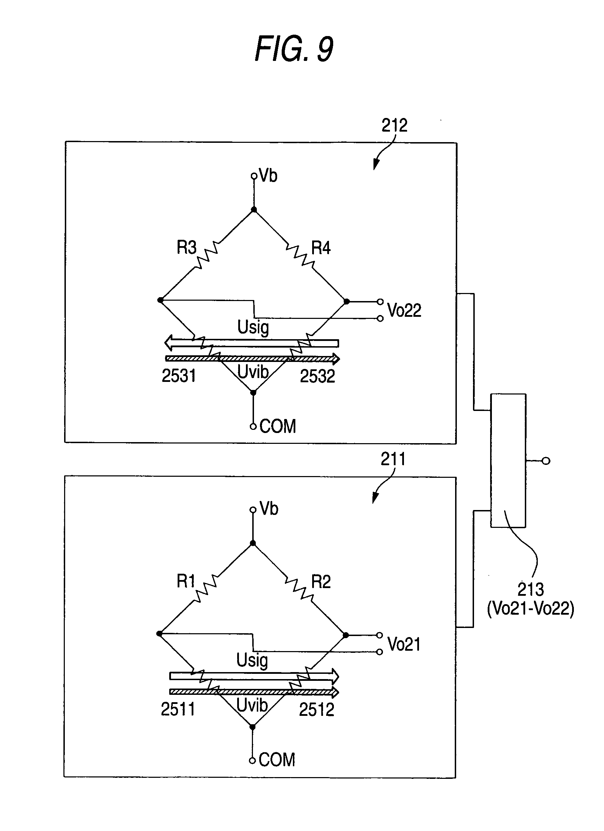

Fig. 9 is a circuit diagram showing a specific configuration of a detecting section for detecting outputs of the thermal flow sensors 251, 253. In Fig. 9, reference numerals 211, 212 are bridge circuits for detecting changes in resistance (changes in temperature) of the heater wires 2511, 2512, 2531, 2532 of the thermal flow sensors 251, 253. Reference numeral 213 is a compensation section for compensating a noise component caused by vibration, based on a difference between the output Vₒ21 of the bridge circuit 11 and the output Vₒ22 of the bridge circuit 212.
In this connection, in the compensation section 213 of this embodiment, while the polarities of the output Vₒ21 of the bridge circuit 211 and the output Vₒ22 of the bridge circuit 212 are being taken into account, a difference between them is obtained.

In the bridge circuit 211, as explained in Fig. B11, the movement (the arrow U_{sig}) of the detection gas corresponding to the concentration of the measurement gas and the movement (the arrow U_{vib}) of the detection gas caused by vibration are detected. The output signal Vₒ21 contains a vibration noise component. In this case, the arrows U_{sig} and U_{vib} are directed in the same direction.
On the other hand, in the bridge circuit 212, the movement (the arrow U_{sig}) of the detection gas corresponding to the concentration of the measurement gas and the movement (the arrow U_{vib}) of the detection gas caused by vibration are detected. Therefore, the output signal Vₒ22 containing the vibration noise component is obtained. However, the arrow U_{sig} and the arrow U_{vib} are directed in the opposite direction.

Consequently, according to the positions of the thermal flow sensors 251, 253, a phase of the noise component (the arrow U_{vib}) superimposed on the signal component (the arrow U_{sig}) is reversed. Therefore, when a difference (Vₒ21 - Vₒ22) of the output signals Vₒ21 and Vₒ22 is obtained by the compensation section 213, the vibration noise components contained in the output signals Vₒ21 and Vₒ22 can be compensated and it becomes possible to obtain a detection signal with little noise.

### FIFTH EMBODIMENT

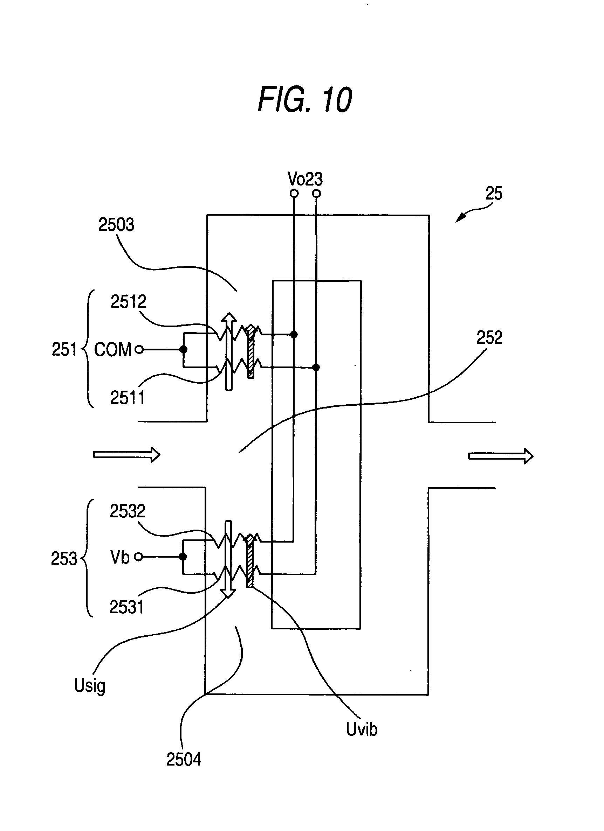

Fig. 10 is a view showing a configuration of a fifth embodiment of the infrared gas analyzer of the present invention. Same reference numerals are used to indicate similar parts in Figs. 8 and 10. In the embodiment shown in Fig. 10, a bridge circuit is provided in the compensation section 213, and a vibration noise component is directly removed from the bridge circuit so as to obtain an output signal Vₒ23.

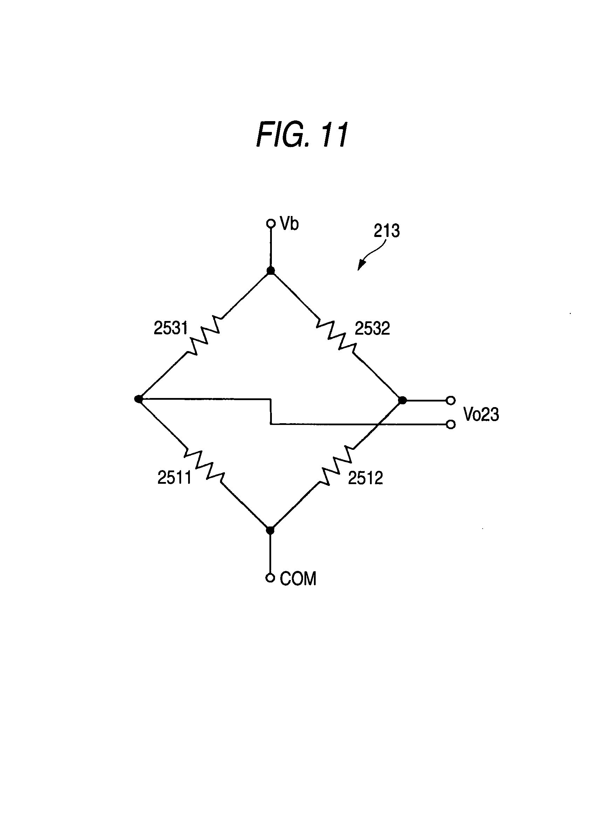

Fig. 11 is a circuit diagram showing an example of the specific configuration of the compensation section 213. As shown in Fig. 11, the heater wires 2511, 2512, 2531, 2532 of the thermal flow sensors 251, 253 are inserted in different sides of the bridge circuit. Therefore, from an output of the bridge circuit, it is possible to obtain an output signal Vₒ23 corresponding to a difference between the outputs of the two thermal flow sensors 251, 253.

That is, the heater wires 2531, 2532 of the thermal flow sensor 253 are inserted in different sides of the bridge circuit in a direction that compensates for the noise component superimposed on the heater wires 2511, 2512 of the thermal flow sensor 251 with respect to the influence (noise component) of vibration.
Therefore, two bridge circuits 211, 212 shown in Fig. 9 can be omitted and the structure can be made simple.

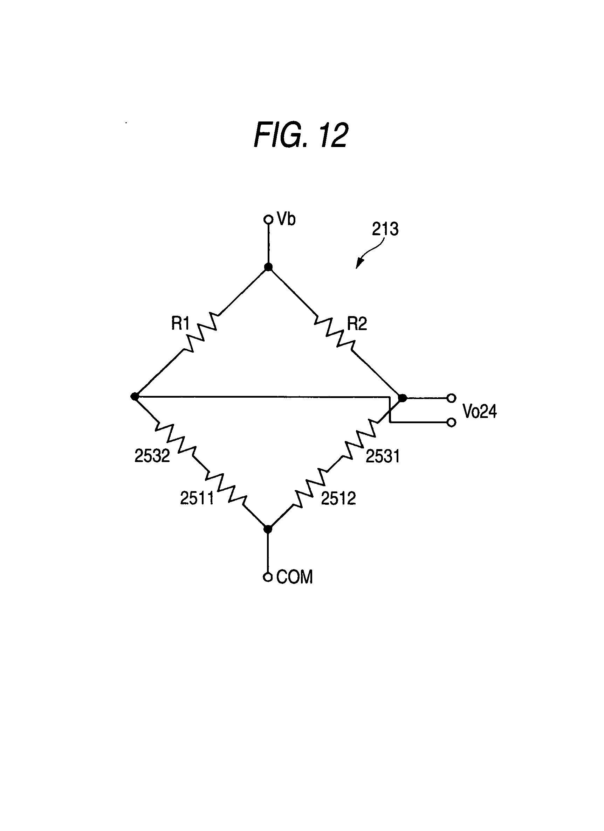

Fig. 12 is a circuit diagram showing a variation of the bridge circuit in the compensation section 213. In the embodiment shown in Fig. 12, the heater wires 2511, 2512, 2531, 2532 of the thermal flow sensors 251, 253 are inserted in common sides of the bridge circuit.
That is, when the heater wires 2531, 2532 of the thermal flow sensor 253 are inserted in common sides of the bridge circuit in a direction that compensates for the noise components superimposed on the heater wires 2511, 2512 of the thermal flow sensor 251 with respect to the influence (the noise component) of vibration, the same noise removing effect as that of Fig. 11 can be realized.

### SIXTH EMBODIMENT

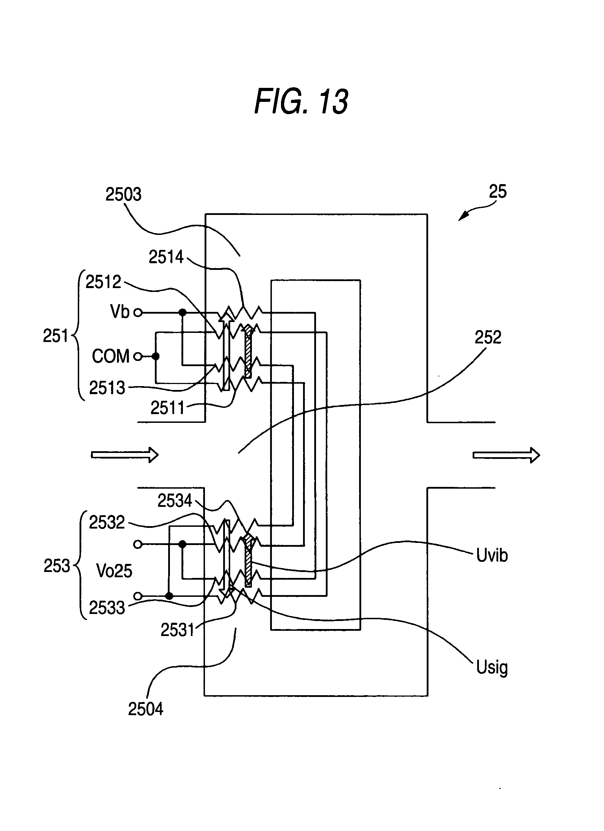

Fig. 13 is a view showing a configuration of a sixth embodiment of the infrared gas analyzer of the present invention. Same reference numerals are used to indicate similar parts in Figs. 8 to 13. In the embodiment shown in Fig. 13, the thermal flow sensors 251, 253 are respectively made up of four heater wires 2511, 2512, 2513, 2514 and 2531, 2532, 2533, 2534.

In the thermal flow sensors 251, 253, the heater wire portions arranged on the upstream side and the downstream side of the gas flow respectively include two heater wires, and these heater wires are arranged in parallel with respect to the flow direction of the detection gas.

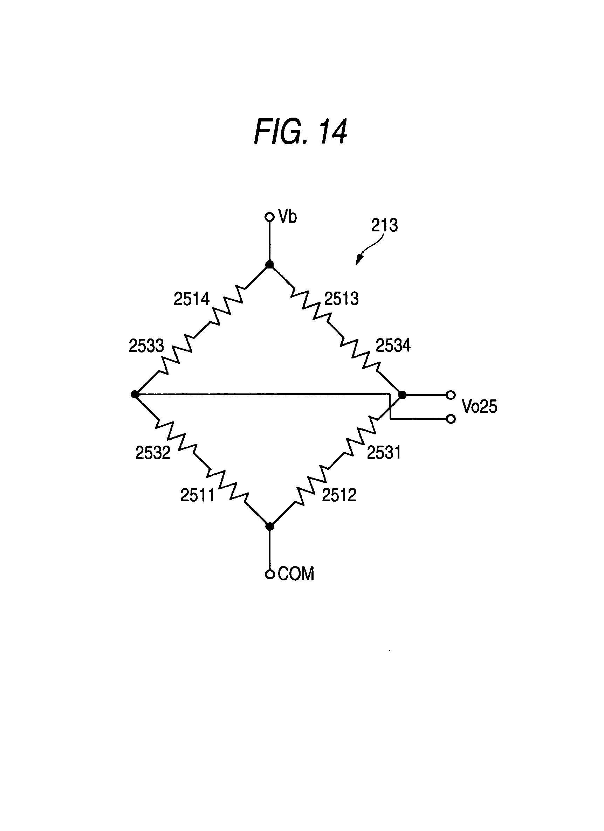

Fig. 14 is a circuit diagram showing a specific example of the configuration of the compensation section (the bridge circuit) 213. As shown in Fig. 14, the heater wires 2511, 2512, 2513, 2514, 2531, 2532, 2533, 2534 of the thermal flow sensor 251, 253 are inserted in the respective sides of the bridge circuit in a direction that increases the sensor outputs of themselves.
Therefore, the same noise removing effect as that of Fig. 11 can be realized. Further, it is possible to obtain an output signal Vₒ25, the magnitude of which is twice as large as that of Fig. 11.
It should be noted that the number of heater wires of the thermal flow sensors 251, 253 is not limited to four.

### SEVENTH EMBODIMENT

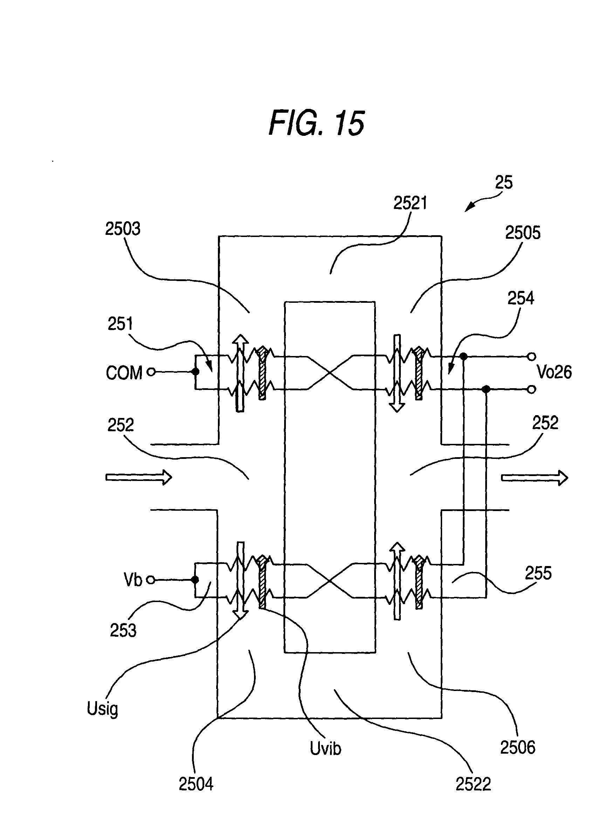

Fig. 15 is a view showing a configuration of a seventh embodiment of the infrared gas analyzer of the present invention. Same reference numerals are used to indicate similar parts in Figs. 8-14 and 15. In the embodiment shown in Fig. 15, U-shaped portions 2521, 2522 are provided to the branched gas flow channels 2503, 2504, so that gas flow channels 2505, 2506 through which the detection gas flows in the opposite direction to the gas flow channels 2503, 2504 can be formed, and the thermal flow sensors 254, 255 are arranged in these gas flow channels 2505, 2506.

In this connection, all of the four thermal flow sensors 251, 253, 254, 255 are arranged in the same direction. A relation between the signal component (the arrow U_{sig}) and the noise component (the arrow U_{vib}) at each thermal flow sensor position is shown in the drawing.

As can be seen from Fig. 15, concerning the thermal flow sensors 251, 254, a phase of the noise component (the arrow U_{vib}) superimposed on the signal component (the arrow U_{sig}) is reversed. Therefore, it is possible to compensate the noise component between them. In the same manner, concerning the thermal flow sensors 253, 255, a phase of the noise component (the arrow U_{vib}) superimposed on the signal component (the arrow U_{sig}) is reversed. Therefore, it is possible to compensate the noise component between them.

In the above explanation, an example is shown in which the arrow U_{sig} and the arrow U_{vib} are arranged in the same direction at the position of the thermal flow sensor 251. This exemplarily shows a state at a specific instant. Therefore, a relation between the arrow U_{sig} and the arrow U_{vib} is not necessarily limited to this.
A position at which each heater wire of the thermal flow sensor 251, 253 is inserted in the bridge circuit is not limited to the embodiment shown in the drawing.

### EIGHTH EMBODIMENT

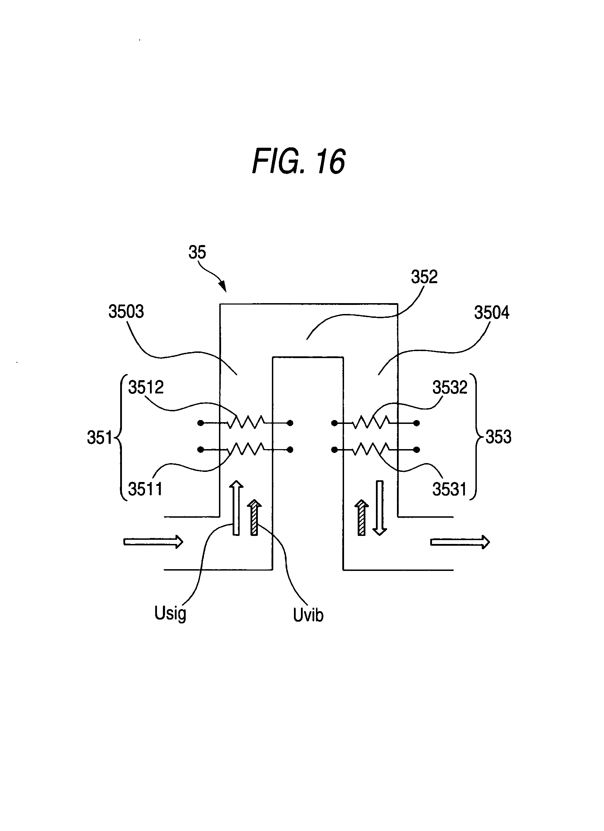

Fig. 16 is a view showing a configuration of an eighth embodiment of the infrared gas analyzer of the present invention. Same reference numerals are used to indicate similar parts in Fig. 16 and Figs. 33 and 35. In the embodiment shown in Fig. 16, a U-shaped portion 352 is provided between the gas flow channels 3503 and 3504. Therefore, a direction of the flow of the detection gas flowing through the gas flow channel 3503 and a direction of the flow of the detection gas flowing through the gas flow channel 3504 are opposite to each other. In one gas flow channel 3503, the thermal flow sensor 351 is arranged. In the other gas flow channel 3504, the thermal flow sensor 353 including heater wires 3531, 3532 is arranged. The heater wires 3531, 3532 of the thermal flow sensor 353 are arranged in the same direction as that of the heater wires 3511, 3512 of the thermal flow sensor 351.

A flow of the detection gas corresponding to the concentration of the detection component flows through the gas flow channels 35·BR>03, 3504, which are folded back, in the direction of the arrow U_{sig}. A flow of the detection gas caused by vibration acts as the arrow U_{vib} in the gas flow channels 3503, 3504.
In this connection, the detection gas reciprocates in the gas flow channels 3503, 3504 when the infrared light is turned on and off. However, in this case, in order to clarify the operational effect of the gas flow channels 3503, 3504 which are folded back, the flow of the detection gas is shown by an arrow (flow) in one direction. With respect to the flow (the arrow U_{vib}) of the detection gas caused by vibration, the circumstances are the same.

When two thermal flow sensors 351, 353 are arranged in the same direction in the gas flow channels 3503, 3504, which are folded back, as shown in Fig. 16, an influence of vibration (the arrow U_{vib}) acts in an opposite phase with respect to the flow of the detection gas (the arrow U_{sig}) corresponding to the concentration of the measurement component, in the thermal flow sensors 351, 353.

That is, in the state shown in Fig. 16, the arrow U_{sig} and the arrow U_{vib} are in the same direction at the position of the thermal flow sensor 351, and the arrow U_{sig} and the arrow U_{vib} are in opposite directions at the position of the thermal flow sensor 353.

Accordingly, when an output of the thermal flow sensor 351 and an output of the thermal flow sensor 353 are added in the polarity for compensating the noise component caused by the vibration, an influence of the external vibration given to the infrared gas analyzer can be removed and a highly accurate measurement operation can be conducted.

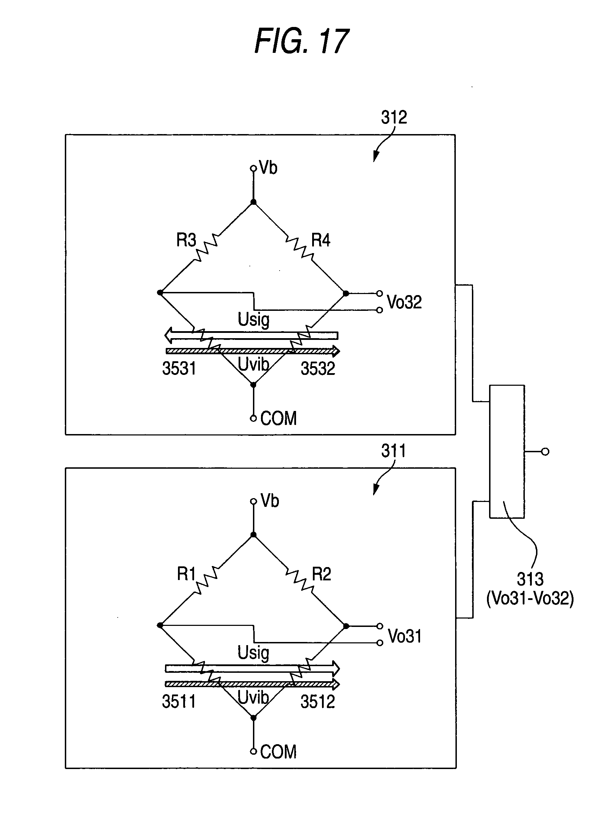

Fig. 17 is a circuit diagram showing a specific example of the configuration of a detection section for detecting outputs of the thermal flow sensors 351, 353. In Fig. 17, reference numerals 311, 312 are bridge circuits for detecting changes in resistance (changes in temperature) of the heater wires 3511, 3512, 3531, 3532 of the thermal flow sensors 351, 353. Reference numeral 313 is a compensation section for compensating a noise component caused by vibration based on a difference between the output Vₒ31 of the bridge circuit 311 and the output Vₒ32 of the bridge circuit 312.
In the compensation section 113 of this embodiment, while the polarities of the output Vₒ31 of the bridge circuit 311 and the output Vₒ32 of the bridge circuit 312 are taken into account, a difference between them is obtained.

In the bridge circuit 311, as explained in Fig. C10, the movement (the arrow U_{sig}) of the detection gas corresponding to the concentration of the measurement gas and the movement (the arrow U_{vib}) of the detection gas caused by vibration are detected, and the output signal Vₒ31 contains a vibration noise component. In this case, the arrows U_{sig} and U_{vib} are directed in the same direction.
On the other hand, in the bridge circuit 312, the movement (the arrow U_{sig}) of the detection gas corresponding to the concentration of the measurement gas and the movement (the arrow U_{vib}) of the detection gas caused by vibration are detected. Then, the output signal Vₒ32 containing the vibration noise component is obtained. However, the arrow U_{sig} and the arrow U_{vib} are directed in opposite directions.

Consequently, according to the positions of the thermal flow sensors 351, 353, a phase of the noise component (the arrow U_{vib}) superimposed on the signal component (the arrow U_{sig}) is reversed. Therefore, when a difference (Vₒ31 - Vₒ32) of the output signals Vₒ31 and Vₒ32 is obtained by the compensation section 313, the vibration noise components contained in the output signals Vₒ31 and Vₒ32 can be compensated and it becomes possible to obtain a detection signal with little noise.

### NINTH EMBODIMENT

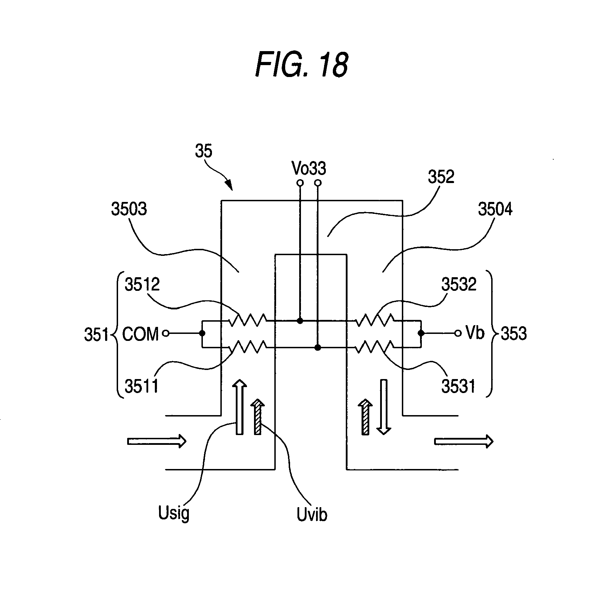

Fig. 18 is a view showing a configuration of a ninth embodiment of the infrared gas analyzer of the present invention. Same reference numerals are used to indicate similar parts in Figs. 16 and 18. In the embodiment shown in Fig. 18, a bridge circuit is provided in the compensation section 313, and a vibration noise component is directly removed from the bridge circuit so as to obtain an output signal Vₒ33.

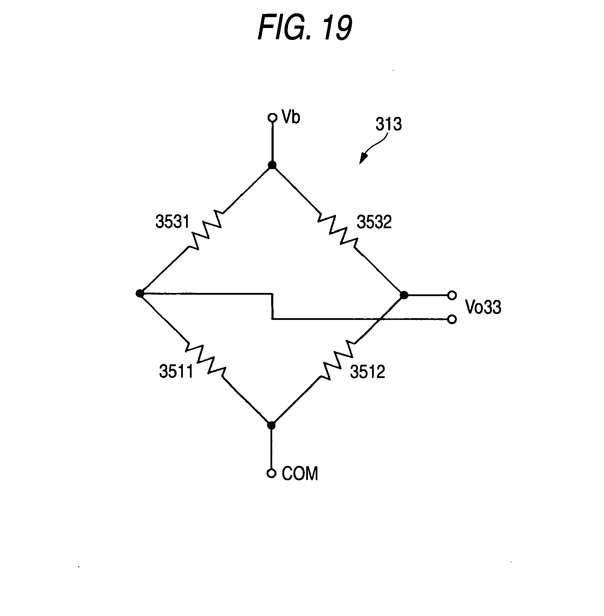

Fig. 19 is a circuit diagram showing a specific example of the configuration of the compensation section 313. As shown in Fig. 19, the heater wires 3511, 3512, 3531, 3532 of the thermal flow sensors 351, 353 are inserted in different sides of the bridge circuit. Therefore, from an output of the bridge circuit, it is possible to obtain an output signal Vₒ33 corresponding to a difference between the outputs of the two thermal flow sensors 351, 353.

That is, the heater wires 3531, 3532 of the thermal flow sensor 353 are inserted in different sides of the bridge circuit in a direction that compensates for the noise component superimposed on the heater wires 3511, 3512 of the thermal flow sensor 351 with respect to an influence (noise component) of vibration.
Therefore, two bridge circuits 311, 312 shown in Fig. 17 can be omitted and the structure can be made simple.

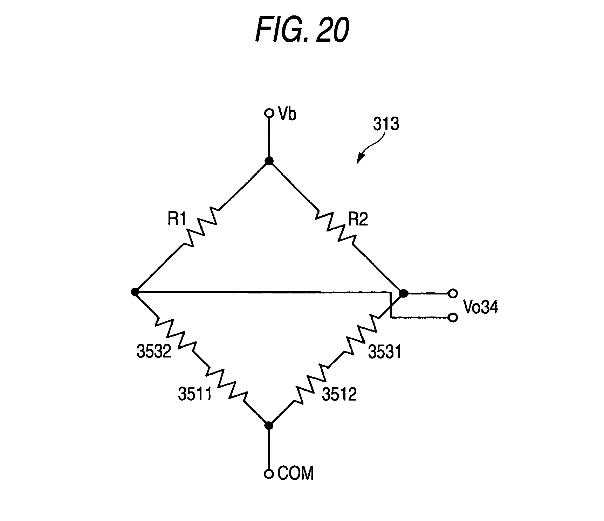

Fig. 20 is a circuit diagram showing a variation of the bridge circuit of the compensation section 313. As shown in Fig. 20, the heater wires 3511, 3512, 3531, 3532 of the thermal flow sensors 351, 353 are inserted in common sides of the bridge circuit.
That is, the heater wires 3531, 3532 of the thermal flow sensor 353 are inserted in common sides of the bridge circuit in a direction so that noise components superimposed on the heater wires 3511, 3512 of the thermal flow sensor 351 can be compensated with respect to an influence (a noise component) of vibration. In this way, the same noise removing effect as that of Fig. 19 can be realized.

### TENTH EMBODIMENT

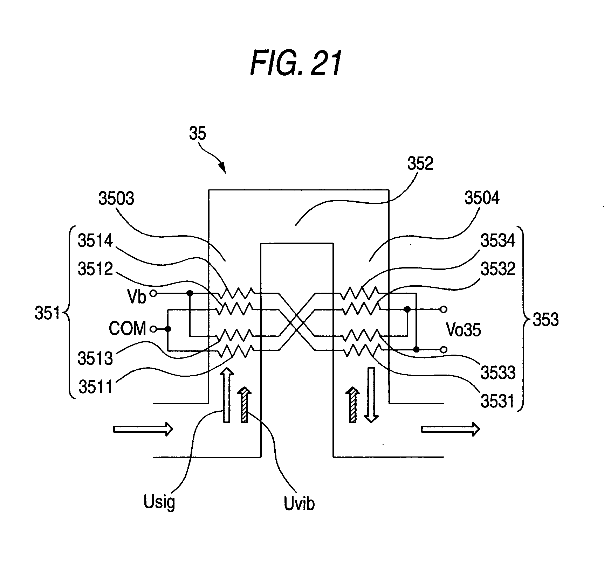

Fig. 21 is a view showing a configuration of a tenth embodiment of the infrared gas analyzer of the present invention. Same reference numerals are used to indicate similar parts in Fig. 21 and Figs. 33 to 35. In the embodiment shown in Fig. 21, the thermal flow sensors 351, 353 respectively include four heater wires 3511, 3512, 3513, 3514, and 3531, 3532, 3533, 3534.

As for the thermal flow sensors 351, 353, heater wire portions arranged on the upstream side and the downstream side of the gas flow include two heater wires respectively. These heater wires are arranged in parallel with respect to the detection gas flow direction.

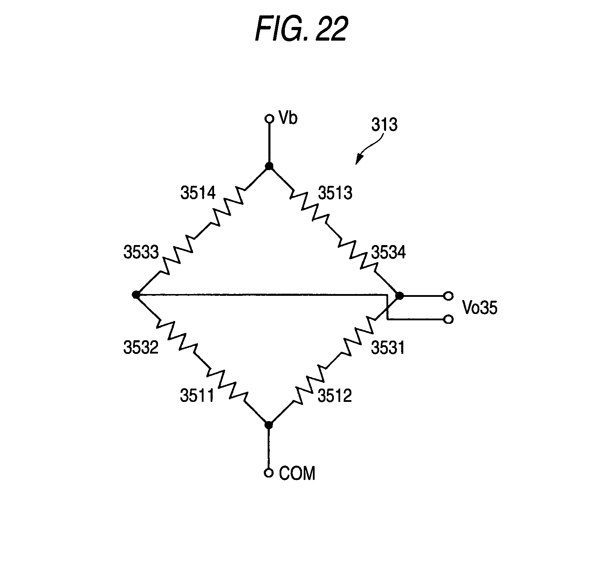

Fig. 22 is a circuit diagram showing a specific example of the configuration of the compensation section (the bridge circuit) 313. As shown in Fig. 22, the heater wires 3511, 3512, 3513, 3514, 3531, 3532, 3533, 3534 of the thermal flow sensors 351, 353 are inserted in respective sides of the bridge circuit in a direction so that an output of each sensor can be increased.
Therefore, the same noise removing effect as that of Fig. 19 can be realized. Further, it is possible to obtain an output signal Vₒ35, the magnitude of which is twice as large as that of Fig. 19.
In this connection, the number of the heater wires of the thermal flow sensors 351, 353 is not necessarily limited to four.

In the above explanation, an example is shown in which the arrow U_{sig} and the arrow U_{vib} are arranged in the same direction at the position of the thermal flow sensor 51. This exemplarily shows a state at a specific instant. Therefore, a relation between the arrow U_{sig} and the arrow U_{vib} is not necessarily limited to this.
A position at which each heater wire of the thermal flow sensors 351, 353 is inserted into the bridge circuit is not limited to the embodiment shown in the drawing.

### ELEVENTH EMBODIMENT

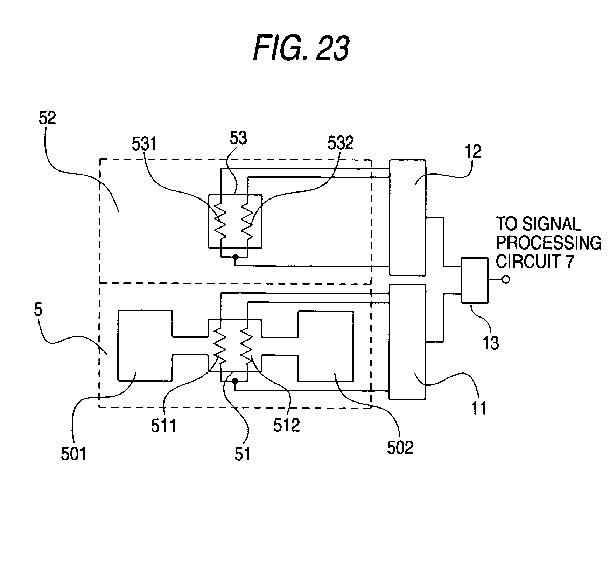

Fig. 23 is a view showing a configuration of an eleventh embodiment of the infrared gas analyzer of the present invention. Same reference numerals are used to indicate similar parts in Fig. 23 and Figs. 33 to 35. Reference numeral 52 is a detector for compensation, and has a thermal flow sensor 53 including heater wires 531, 532. The compensation detector 52 has a space in which the detection gas containing the measurement component is filled and formed in a shape similarly as that of the gas flow channel of the detector 5, and a thermal flow sensor 53 is arranged in the space. In this connection, in Fig. 23, room-shaped spaces which are a little larger than the gas flow channel are exemplarily shown as spaces in which the thermal flow sensors 51, 53 are arranged. However, it should be noted that the shape of the space is not limited to the above specific embodiment.

The compensation detector 52 is fixed together with the detector 5 or formed integrally with the detector 5 so that the compensation detector 52 can be given an influence of the vibration in the same manner as that of the detector 5. Further, the heater wires 531, 532 of the thermal flow sensor 53 are arranged in the same direction as that of the heater wires 511, 512 of the thermal flow sensor 51.
In this connection, infrared light is not incident upon the compensation detector 52.

Reference numerals 11, 12 are bridge circuits for detecting changes in resistance (changes in temperature) of the heater wires 511, 512, 531, 532 of the thermal flow sensors 51, 53. Reference numeral 13 is a compensation section for obtaining a difference between the output of the bridge circuit 11 and the output of the bridge circuit 12.

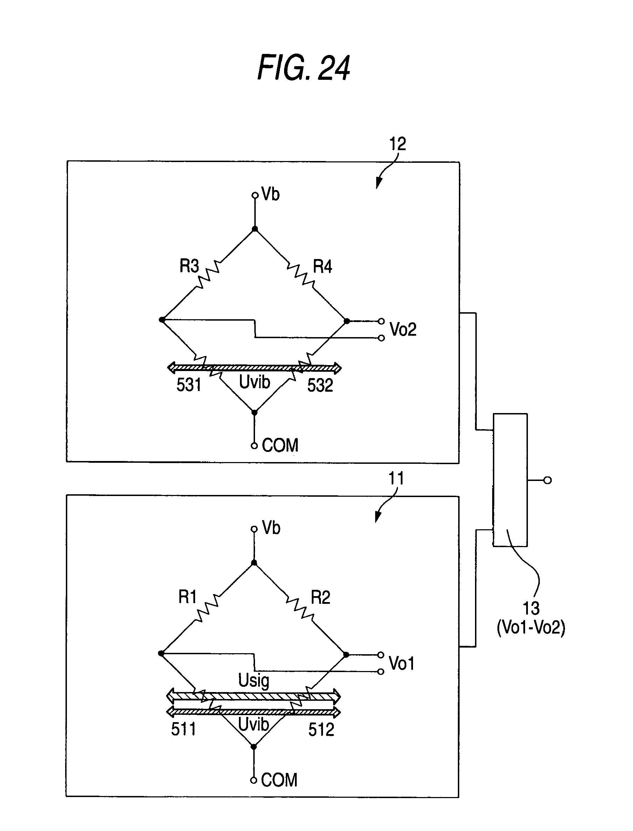

Fig. 24 is a circuit diagram showing a specific example of the configuration of the bridge circuits 11, 12. As shown in Fig. 24, the heater wires 511, 512, 531, 532 of the thermal flow sensors 51, 53 are respectively inserted in two sides of the bridge circuits 11, 12. Therefore, changes in resistance caused by a movement of the detection gas are detected as changes in the output voltages Vₒ1, Vₒ2.

As explained in Fig. D11, in the bridge circuit 11, a movement (the arrow U_{sig}) of the detection gas corresponding to the concentration of the measurement gas and a movement (the arrow U_{vib}) of the detection gas caused by vibration are detected, and the output signal Vₒ1 contains a vibration noise component.
On the other hand, in the bridge circuit 12, only the movement (the arrow U_{vib}) of the detection gas caused by vibration is detected and the output signal Vₒ2 corresponding to it is obtained.

Accordingly, when a difference (Vₒ1 - Vₒ2) between the output signals Vₒ1 and Vₒ2 is obtained by the compensation section 13, it is possible to compensate a vibration noise component contained in the output signal Vₒ1. Therefore, it is possible to obtain a detection signal with little noise.

### TWELFTH EMBODIMENT

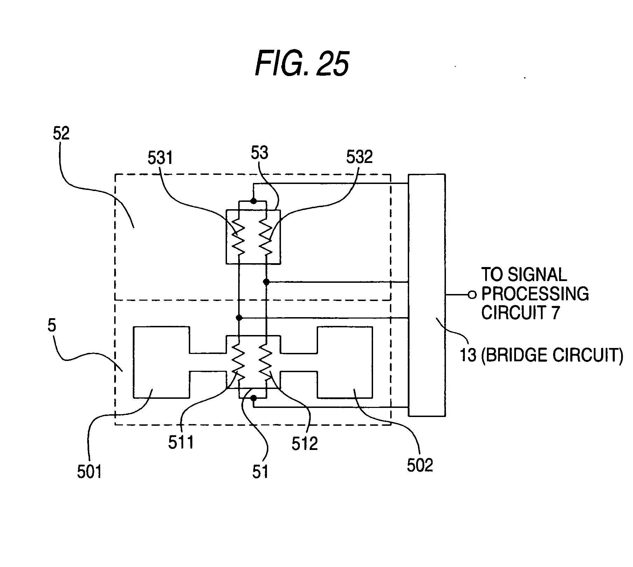

Fig. 25 is a view showing a configuration of a twelfth embodiment of the infrared gas analyzer of the present invention. Same reference numerals are used to indicate similar parts in Figs. 23 and 25. In the embodiment shown in Fig. 25, a bridge circuit is provided in the compensation section 13, and an output signal from which a vibration noise component is removed is directly obtained from the bridge circuit.

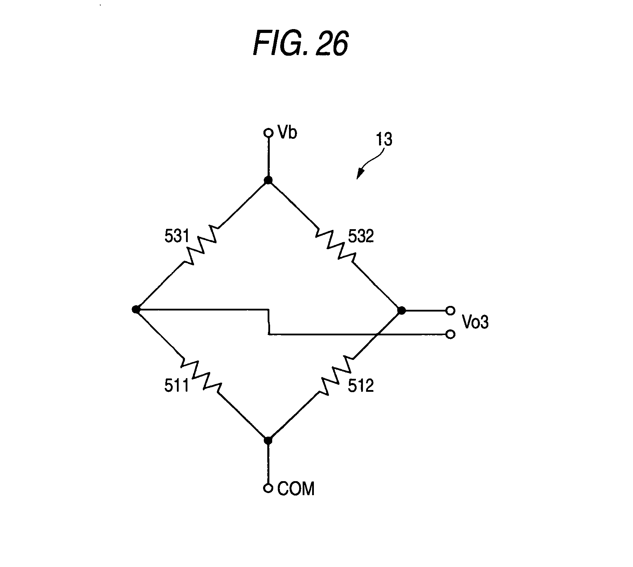

Fig. 26 is a circuit diagram showing a specific example of the configuration of the compensation section 13. As shown in Fig. 26, the heater wires 511, 512, 531, 532 of the thermal flow sensors 51, 53 are inserted in different sides of the bridge circuit. Therefore, from an output of the bridge circuit, it is possible to obtain an output signal Vₒ3 corresponding to a difference between the outputs of the two thermal flow sensors 51, 53.

That is, the heater wires 531, 532 of the thermal flow sensor 53 are inserted in different sides of the bridge circuit in a direction that compensates for noise components superimposed on the heater wires 511, 512 of the thermal flow sensor 51.
Therefore, two bridge circuits 11, 12 shown in Fig. 23 can be omitted and the structure can be made simple.

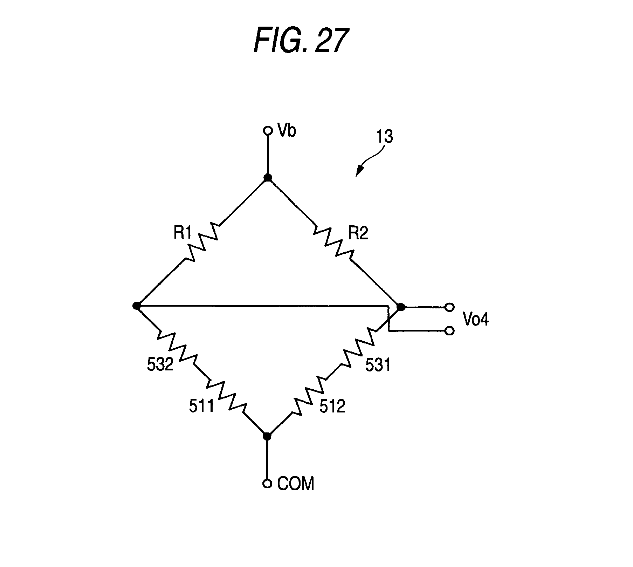

Fig. 27 is a circuit diagram showing a variation of the bridge circuit of the compensation section 13. As shown in Fig. 27, the heater wires 511, 512, 531, 532 of the thermal flow sensors 51, 53 are inserted in common sides of the bridge circuit.
That is, in this embodiment, the heater wires 531, 532 of the thermal flow sensor 53 are inserted in common sides of the bridge circuit in a direction so that noise components superimposed on the heater wires 511, 512 of the thermal flow sensor 51 can be compensated. In this way, the same noise removing effect as that of Fig. 26 can be realized.

### THIRTEENTH EMBODIMENT

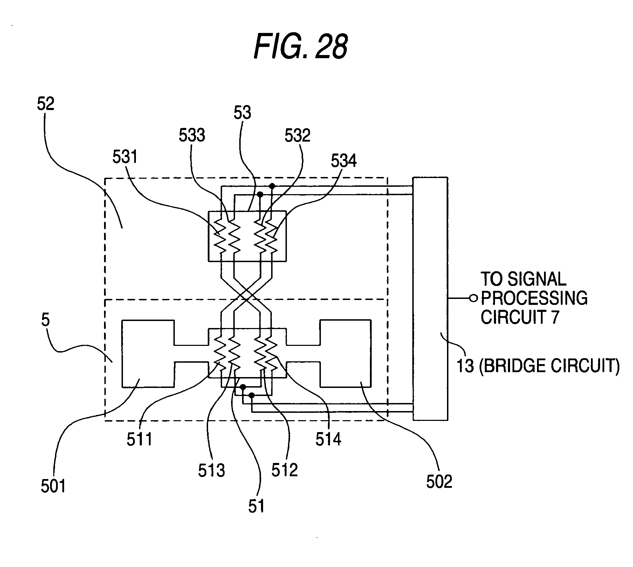

Fig. 28 is a view showing a configuration of a thirteenth embodiment of the infrared gas analyzer of the present invention. Same reference numerals are used to indicate similar parts in Figs. 23-27 and Fig. 28. In the embodiment shown in Fig. 28, the thermal flow sensors 51, 53 include four heater wires 511, 512, 513, 514, and 531, 532, 533, 534, respectively.

In the thermal flow sensors 51, 53, heater wire portions arranged on the upstream side and the downstream side of the gas flow respectively include two heater wires. These heater wires are arranged in parallel with respect to the direction of the flow of the detection gas.

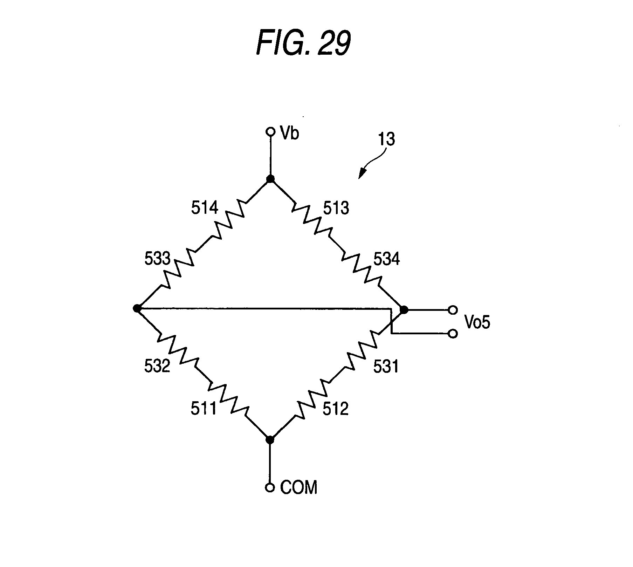

Fig. 29 is a circuit diagram showing a specific example of the configuration of the compensation section (the bridge circuit) 13. As shown in Fig. 29, heater wires 511, 512, 513, 514, 531, 532, 533, 534 of the thermal flow sensors 51, 53 are respectively inserted in respective sides of the bridge circuit in a direction that increases the sensor output.
Therefore, it is possible to realize the same noise removing effect as that of Fig. 26. Further, it is possible to obtain an output signal Vₒ5, the magnitude of which is twice as large as that of Fig. 26.
In this connection, the number of heater wires of the thermal flow sensors 51, 53 is not necessarily limited to four.

### FOURTEENTH EMBODIMENT

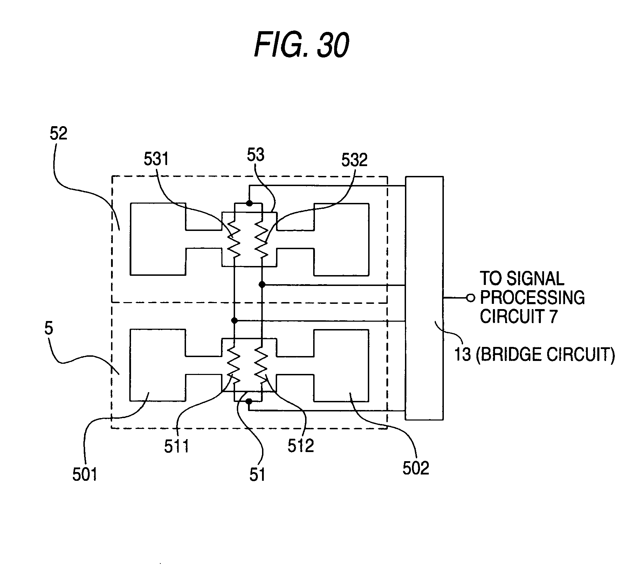

Fig. 30 is a view showing a configuration of a fourteenth embodiment of the infrared gas analyzer of the present invention. Same reference numerals are used to indicate similar parts in Figs. 23-29 and Fig. 30. In the embodiment shown in Fig. 30, a space having the same shape as that of the reference side chamber 501 and the sample side chamber 502 of the measurement detector 5 is formed in the compensation detector 52. As described before, infrared light is not incident upon the space of the compensation detector 52.

That is, the compensation detector 52 is completely the same as the measurement detector 5 in the shape and the size. Accordingly, the detection gas in the compensation detector 52 behaves completely in the same manner as the detection gas in the measurement detector 5 with respect to the applied vibration. Therefore, it is possible to more accurately remove vibration noise.

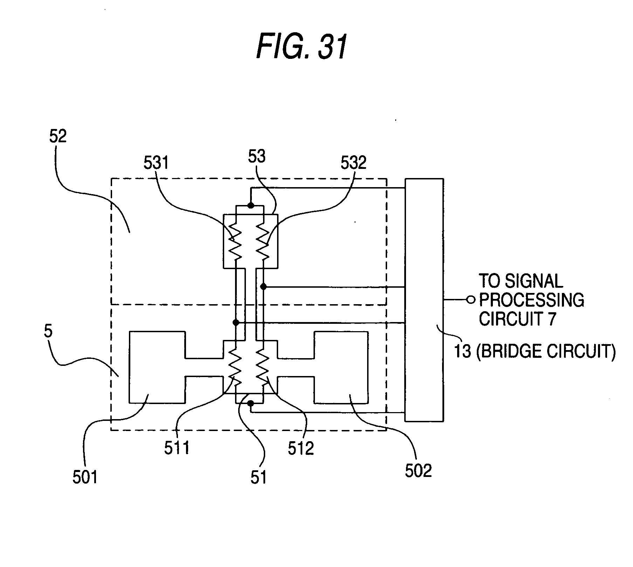

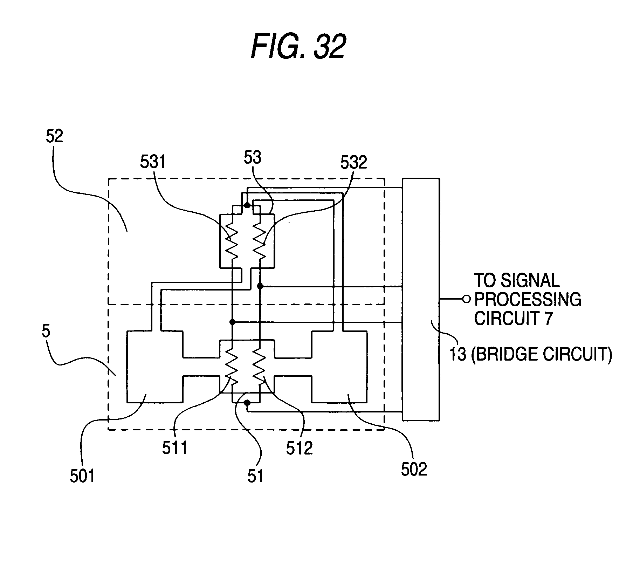

Figs. 31 and 32 are views respectively showing a configuration of another embodiment of the infrared gas analyzer of the present invention. Same reference numerals are used to indicate similar parts in Figs. 23-30 and Figs. 31 and 32.
In the embodiment shown in Fig. 31, in order to fill the space of the compensation detector 52 with the detection gas containing the component to be measured, the space of the measurement detector 5 and the space of the compensation detector 52 are connected by a flow channel.
In the embodiment shown in Fig. 32, the reference side chamber 501 and the sample side chamber 502 of the detector 5 are connected via the space of the compensation detector 52.
According to the embodiments shown in Figs. 31 and 32, when the detection gas in the compensation detector 52 is made to flow, a state of the detection gas in the compensation detector 52 can always be maintained in the same state as that of the detection gas in the detector 5.
In the embodiment shown in Fig. 32, the detection gas in the thermal flow sensor 53 flows. However, since the heater wires 531, 532 are arranged in parallel with respect to the flow of the detection gas, the thermal flow sensor 53 does not detect the flow of the detection gas.
Fig. 23
   - #1: To signal processing circuit 7
Fig. 25
   - #1: To signal processing circuit 7
   - 13: (Bridge circuit)
Fig. 28
   - #1: To signal processing circuit 7
   - 13: (Bridge circuit)
Fig. 30
   - #1: To signal processing circuit 7
   - 13: (Bridge circuit)
Fig. 31
   - #1: To signal processing circuit 7
   - 13: (Bridge circuit)
Fig. 32
   - #1: To signal processing circuit 7
   - 13: (Bridge circuit)
Fig. 33
   - 7: Signal processing circuit
   - a: AC voltage amplification
   - b: Outlet of sample gas
   - 3: Reference cell
   - 4: Sample cell
   - 9: Trimmer
   - 2: Distribution cell (Interference filter)
   - 6: Rotating sector (One point chopper)
   - 8: Synchronous motor
   - 1: Infrared light source (Single light source)
   - c: Inlet of sample gas
   - d: Smoothing
   - e: DC amplification
   - f: Lineariser
   - g: Synchronize with rotating period of sector
   - h: Exchange voltage with current
   - i: Output
   - j: Simultaneous transmission
   - k: Synchronous rectification
Fig. 36(a), 36(b)
   - #1: Apply vibration

## Claims

1. An infrared gas analyzer, comprising:
a sample cell through which a sample gas containing a measurement component that absorbs an infrared light flows;
one or a plurality of light sources that emits the infrared light; and
a detector that detects a concentration of the measurement component contained in the sample gas by utilizing a change in the infrared light being absorbed by the measurement component when the sample gas passes through the sample cell,
wherein the detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first and a second thermal flow sensors arranged in the gas flow channel,
wherein the gas flow channel has a flow channel portion in which the detection gas flows through a right angle, and
the first and the second thermal flow sensors are arranged in the same direction at different positions in which flow directions of the detection gas in the gas flow channel are different from each other.

2. The infrared gas analyzer according to claim 1, further comprising:
a compensation section for compensating an output of the first thermal flow sensor by an output of the second thermal flow sensor.

3. The infrared gas analyzer according to claim 2,
wherein the compensation section compensates for a noise component caused by a vibration, based on the respective outputs of the first and the second thermal flow sensors.

4. The infrared gas analyzer according to claim 1,
wherein each of the first and the second thermal flow sensors is a bridge circuit having at least two heater wires.

5. The infrared gas analyzer according to claim 2,
wherein each of the first and the second thermal flow sensors has at least two heater wires, and
the compensation section is a bridge circuit that includes the heater wires of the first and the second thermal flow sensors.

6. The infrared gas analyzer according to claim 1,
wherein each of the first and the second thermal flow sensors has at least two heater wires arranged in parallel with respect to a direction for detecting a flow of the detection gas.

7. An infrared gas analyzer, comprising:
a sample cell through which a sample gas containing a measurement component that absorbs an infrared light flows;
one or a plurality of light sources that emits the infrared light; and
a detector that detects a concentration of the measurement component contained in the sample gas by utilizing a change in the infrared light being absorbed by the measurement component when the sample gas passes through the sample cell,
wherein the detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first and a second thermal flow sensors arranged in the gas flow channel,
the gas flow channel has a branch section where the detection gas flows by being branched into two directions that are opposite to each other, and
the first and the second thermal flow sensors are arranged in the same direction at different positions in which flow directions of the detection gas in the gas flow channel are different from each other.

8. The infrared gas analyzer according to claim 7, further comprising:
a compensation section for compensating an output of the first thermal flow sensor by an output of the second thermal flow sensor.

9. The infrared gas analyzer according to claim 8,
wherein the compensation section compensates for a noise component caused by a vibration, based on the respective outputs of the first and the second thermal flow sensors.

10. The infrared gas analyzer according to claim 7,
wherein each of the first and the second thermal flow sensors is a bridge circuit having at least two heater wires.

11. The infrared gas analyzer according to claim 8,
wherein each of the first and the second thermal flow sensors has at least two heater wires, and
the compensation section is a bridge circuit that includes the heater wires of the first and the second thermal flow sensors.

12. The infrared gas analyzer according to claim 7,
wherein each of the first and the second thermal flow sensors has at least two heater wires arranged in parallel with respect to the flow direction of the detection gas.

13. The infrared gas analyzer according to claim 7,
wherein the gas flow channel has U-shaped portions for respectively making the detection gas being branched at the branch portion flow in a reverse direction, and
the detector has a third and a fourth thermal flow sensors arranged in the gas flow channel being folded at the U-shaped portions, in the same direction as the direction of the first and the second thermal flow sensors.

14. An infrared gas analyzer, comprising:
a sample cell through which a sample gas containing a measurement component that absorbs an infrared light flows;
one or a plurality of light sources that emits the infrared light; and
a detector that detects a concentration of the measurement component contained in the sample gas by utilizing a change in the infrared light being absorbed by the measurement component when the sample gas passes through the sample cell,
wherein the detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first and a second thermal flow sensors arranged in the gas flow channel,
the gas flow channel has a U-shaped portion for making the detection gas flow in a reverse direction, and
the first and the second thermal flow sensors are arranged in the same direction at different positions in which flow directions of the detection gas in the gas flow channel are different from each other.

15. The infrared gas analyzer according to claim 14, further comprising:
a compensation section for compensating an output of the first thermal flow sensor by an output of the second thermal flow sensor.

16. The infrared gas analyzer according to claim 15,
wherein the compensation section compensates for a noise component caused by a vibration, based on the respective outputs of the first and the second thermal flow sensors.

17. The infrared gas analyzer according to claim 14,
wherein each of the first and the second thermal flow sensors is a bridge circuit having at least two heater wires.

18. The infrared gas analyzer according to claim 14,
wherein each of the first and the second thermal flow sensors has at least two heater wires, and
the compensation section is a bridge circuit that includes the heater wires of the first and the second thermal flow sensors.

19. The infrared gas analyzer according to claim 14,
wherein each of the first and the second thermal flow sensors has at least two heater wires arranged in parallel with respect to the flow direction of the detection gas.

20. An infrared gas analyzer, comprising:
a sample cell through which a sample gas containing a measurement component that absorbs an infrared light flows;
one or a plurality of light sources that emits the infrared light;
a measurement detector that detects a concentration of the measurement component contained in the sample gas by utilizing a change in the infrared light being absorbed by the measurement component when the sample gas passes through the sample cell; and
a compensation detector being fixed to the measurement detector,
wherein the measurement detector includes:
a first chamber in which a detection gas containing the measurement component is filled and which is irradiated with the infrared light passed through the sample cell;
a second chamber in which the detection gas containing the measurement component is filled and which is irradiated with the infrared light passed through a passage different from the sample cell;
a gas flow channel which is arranged between the first chamber and the second chamber and through which the detection gas flows between the two chambers; and
a first thermal flow sensor arranged in the gas flow channel, and
the compensation detector includes:
a second thermal flow sensor arranged in a space where the detection gas containing the measurement component is filled, in the same direction as that of the first flow sensor.

21. The infrared gas analyzer according to claim 20, further comprising:
a compensation section for compensating an output of the first thermal flow sensor by an output of the second thermal flow sensor.

22. The infrared gas analyzer according to claim 20,
wherein a shape of the compensation detector is the same as that of the measurement detector, and the compensation detector does not receive the infrared light.

23. The infrared gas analyzer according to claim 20,
wherein the measurement detector and the compensation detector are formed integrally.

24. The infrared gas analyzer according to claim 20,
wherein the compensation section obtains a difference between an output of the first thermal flow sensor and an output of the second thermal flow sensor.

25. The infrared gas analyzer according to claim 20,
wherein each of the first and the second thermal flow sensors is a bridge circuit having at least two heater wires.

26. The infrared gas analyzer according to claim 21,
wherein each of the first and the second thermal flow sensors has at least two heater wires, and
the compensation section is a bridge circuit that includes the heater wires of the first and the second thermal flow sensors.

27. The infrared gas analyzer according to claim 20,
wherein each of the first and the second thermal flow sensors has at least two heater wires arranged in parallel with respect to the flow direction of the detection gas.
